# EUROPÄISCHE PATENTSCHRIFT

(11) **EP 0 499 997 B1**
(45) Veröffentlichungstag und Bekanntmachung des Hinweises auf die Patenterteilung: **14.09.1994**
(21) Anmeldenummer: 92102565.6
(22) Anmeldetag: 15.02.1992
(51) Int. Cl.: G01D 5/38

(54) **Positionsmesseinrichtung mit einer Justiereinrichtung**
Position measuring apparatus with an adjustment apparatus
Dispositif de mesure de position avec un appareil de l'ajustement

(30) Priorität: 21.02.1991 DE 4105434
(43) Veröffentlichungstag der Anmeldung: 26.08.1992
(73) Patentinhaber: Dr. Johannes Heidenhain GmbH, D-83292 Traunreut (DE)
(72) Erfinder: Michel, Dieter, Dipl.-Ing. (FH), W-8220 Traunstein (DE); Huber, Walter, Dipl.-Ing. (FH), W-8220 Traunstein (DE)

(56) Entgegenhaltungen:
- EP-A- 0 397 202
- DE-A- 2 405 341
- GB-A- 2 227 558
- US-A- 3 269 254

## Beschreibung

Die Erfindung betrifft eine Positionsmeßeinrichtung mit einer Justiereinrichtung gemäß dem Oberbegriff des Anspruches 1.

Derartige Positionsmeßeinrichtungen werden bei Bearbeitungs- oder Meßmaschinen zur Messung der Relativlage eines Objektes bezüglich eines anderen Objektes eingesetzt.

Die US-A-3 269 254 beschreibt einen optischen Apparat zum Anzeigen und Messen des Rollwinkels eines bewegbaren Körpers, bei dem ein Körper bezüglich des anderen mittels eines einzelnen Autokollimators abgeglichen wird. Zum Abgleich wird die Linie des primären und sekundären Bildes durch die Mitte des Meßkreuzes gebracht.

Die GB-A-2 227 558 ist mit einem Gitterinterferenz-Verschiebungsmesser befaßt, bei dem unbeachtlich einer schlechten Ebenengestalt der Skala und der Neigung die optischen Strahlen jederzeit in dieselbe Richtung sich ausbreiten können.

In der EP-A-0 397 202 ist ein Kodierer beschrieben, in welchem Interferenzlicht, das durch rediffraktierte Lichtstrahlen gebildet wird, die aus einer zweiten Position erzeugt werden, detektiert wird, um einen verschobenen Zustand einer Skala aufzuspüren.

Aus der DE-PS 28 44 066 ist ferner eine Positionsmeßeinrichtung zum Messen der Relativlage zweier Objekte bekannt, bei der die Meßteilung eines mit dem einen Objekt verbundenen Teilungsträgers von einer mit dem anderen Objekt verbundenen Abtasteinheit abgetastet wird. Die Abtasteinheit weist eine Lichtquelle mit einem Kondensor, eine Abtastplatte mit einer Abtastteilung sowie eine Platine mit mehreren Photoelementen zur Erzeugung von Abtastsignalen bei der Meßbewegung auf. Zur Gewinnung einwandfreier Meßwerte für die Relativlage der beiden Objekte aus diesen Abtastsignalen muß die optimale Winkellage der Abtasteinheit bezüglich der Meßteilung justiert werden. Zur Justierung der Abtasteinheit bezüglich der Meßteilung des Teilungsträgers in Form einer Paralleleinstellung oder einer Moiré-Einstellung der Teilungsstriche zueinander bei der Montage an einer Bearbeitungsmaschine ist die Abtasteinheit über eine elastische Gelenkverbindung an einem Trägerteil schwenkbar gelagert, der am anderen Objekt befestigt ist. Die Justierung der optimalen Winkellage der Abtasteinheit bezüglich der Meßteilung erfolgt mittels einer Einstellschraube unter Beobachtung der optimalen Signalform der Abtastsignale der Abtasteinheit auf einem Oszillographen; diese optimale Winkellage wird anschließend durch eine Feststellschraube fixiert. Diese Justierung ist aber umständlich und zeitraubend.

Der Erfindung liegt die Aufgabe zugrunde, bei einer Positionsmeßeinrichtung der genannten Gattung eine Justiereinrichtung anzugeben, die eine einfache und schnelle manuelle und/oder automatische Justierung mit hoher Genauigkeit und hoher Funktionssicherheit ermöglicht.

Diese Aufgabe wird erfindungsgemäß durch die kennzeichnenden Merkmale des Anspruches 1 gelöst.

Die mit der Erfindung erzielten Vorteile bestehen insbesondere darin, daß die vorgeschlagene Justiereinrichtung auf einfache Weise eine schnelle manuelle und/oder automatische gegenseitige Justierung von Abtasteinheit und Meßteilung mit hoher Genauigkeit und hoher Funktionssicherheit erlaubt und bei allen Positionsmeßeinrichtungen anwendbar ist, die auf beugungsoptischer Grundlage beruhen. Diese Justierung kann einmal unter Zuhilfenahme einer Anzeigeeinheit mit einer optischen Anzeige erfolgen, die vom Signal des positionsabhängigen Photodetektors angesteuert wird; diese visuell-optische Justierung kann zum anderen durch eine automatische Einrichtung ersetzt werden.

Die gewünschte optimale Winkellage der Abtasteinheit bezüglich der Meßteilung des Teilungsträgers kann beispielsweise auch vom Hersteller einmalig unter Beobachtung der optimalen Signalform der Abtastsignale der Abtasteinheit eingestellt und das bei dieser optimalen Winkellage vom positionsabhängigen Photodetektor gelieferte Signal im Meßprotokoll der Positionsmeßeinrichtung eingetragen werden. Der Anwender kann bei der Montage der Positionsmeßeinrichtung an der Bearbeitungsmaschine anhand dieses Signals des positionsempfindlichen Photodetektors somit auf einfache Weise die optimale Winkellage der Abtasteinheit bezüglich der Meßteilung justieren. Gleichfalls ist eine Nachjustierung der Positionsmeßeinrichtung im Laufe der Zeit bzw. bei der Montage an einer anderen Bearbeitungsmaschine ohne weiteres möglich.

Vorteilhafte Ausbildungen der Erfindung entnimmt man den abhängigen Ansprüchen.

Ausführungsbeispiele der Erfindung werden anhand der Zeichnung näher erläutert.

Es zeigen
- Figur 1: eine erste interferentielle Positionsmeßeinrichtung für zwei Meßrichtungen in einer schematischen Seitenansicht,
- Figur 2: eine Platine mit einer Lichtquelle und mit Detektoren in einer Draufsicht,
- Figur 3: eine Abtastplatte mit zwei gekreuzten Abtastgittern in einer Draufsicht,
- Figur 4: einen entfalteten Strahlengang für die erste Positionsmeßeinrichtung nach Figur 1 in einer Meßrichtung,
- Figur 5: eine zweite interferentielle Positionsmeßeinrichtung für eine Meßrichtung in einer schematischen Ansicht und
- Figur 6: eine dritte interferentielle Positionsmeßeinrichtung in einer schematischen Ansicht.

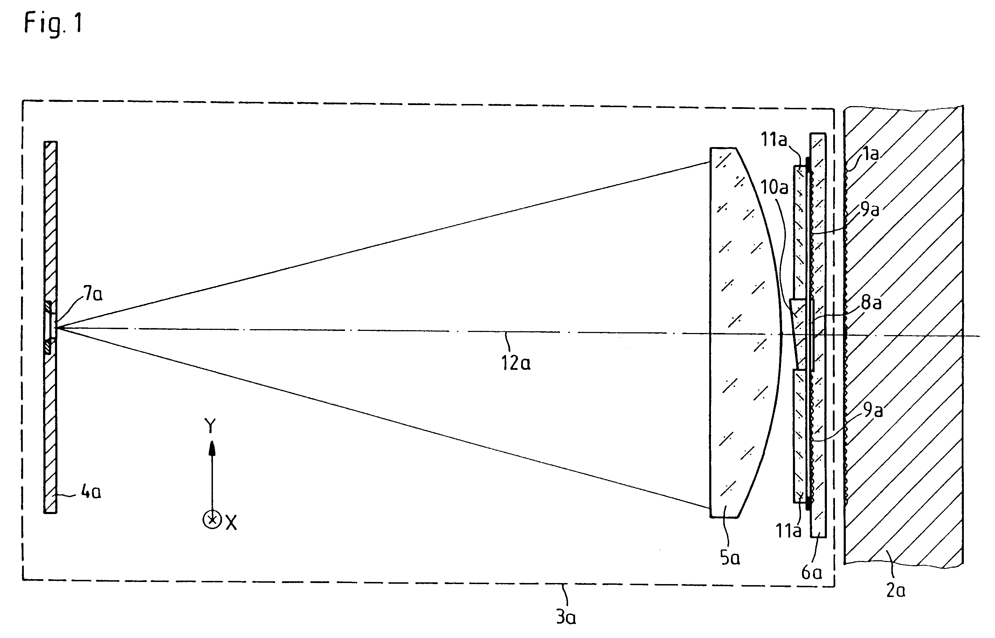

In Figur 1 ist in einer schematischen Seitenansicht eine erste interferentielle Positionsmeßeinrichtung für zwei Meßrichtungen X und Y zur Messung der Relativlage zweier Objekte im Auflicht dargestellt, bei der eine Meßteilung 1a eines mit dem ersten Objekt verbundenen Teilungsträgers 2a von einer mit dem zweiten Objekt verbundenen Abtasteinheit 3a abgetastet wird. Die Abtasteinheit 3a enthält eine Platine 4a, einen Kondensor 5a sowie eine Abtastplatte 6a. Die beiden nicht dargestellten Objekte können beispielsweise durch einen Kreuzschlitten und das Bett einer Bearbeitungsmaschine gebildet sein.

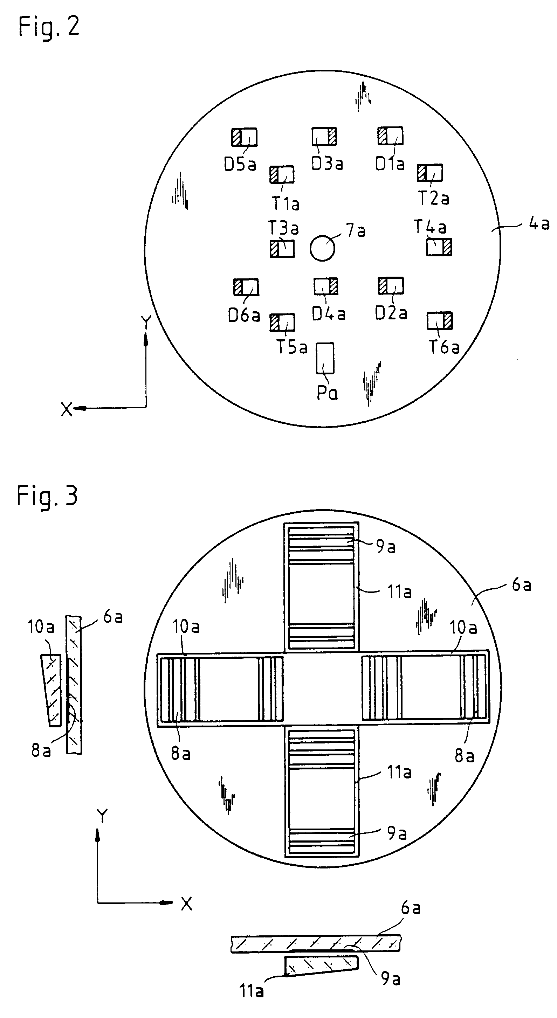

Figur 2 zeigt die Platine 4a in einer Draufsicht, auf der neben einer Lichtquelle 7a eine erste Gruppe von Photodetektoren D1a-D6a für die Meßrichtung X und eine zweite Gruppe von Photodetektoren T1a-T6a für die Meßrichtung Y angeordnet sind. Zusätzlich befindet sich auf der Platine 4a noch ein positionsempfindlicher Photodetektor Pa nach der Erfindung.

In Figur 3 ist die Abtastplatte 6a in einer Draufsicht dargestellt, die eine erste Abtastteilung 8a für die Meßrichtung X sowie eine zweite Abtastteilung 9a für die Meßrichtung Y, beispielsweise in Form von Phasengittern, aufweist. Über der ersten Abtastteilung 8a ist ein erstes Ablenkprisma 10a und über der zweiten Abtastteilung 9a ein zweites Ablenkprisma 11a angeordnet, deren Neigungsorientierungen aus der Figur 3 ersichtlich sind.

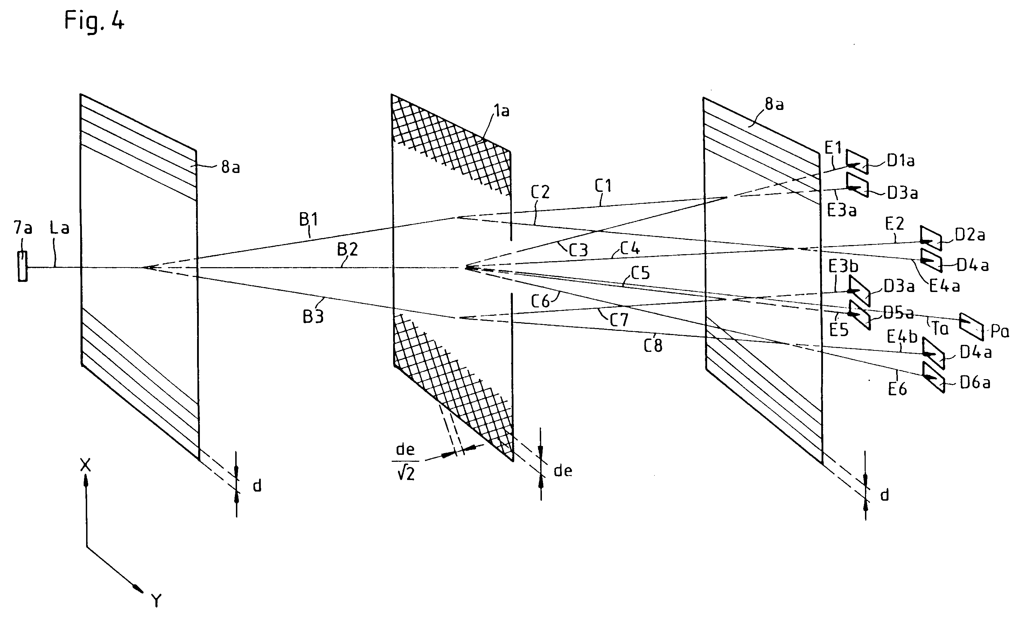

Figur 4 zeigt einen entfalteten Strahlengang für die interferentielle Positionsmeßeinrichtung nach Figur 1 in einer perspektivischen Darstellung, und zwar der Übersicht halber nur für die Meßrichtung X; es sind vereinfachend nur bestimmte gebeugte Teilstrahlenbündel eingezeichnet. Ein von der Lichtquelle 7a ausgehendes und vom Kondensor 5a kollimiertes Lichtstrahlenbündel La wird beim Durchtritt durch die Abtastteilung 8a mit der Gitterkonstanten d, dessen Teilungsstriche senkrecht zur Meßrichtung X verlaufen, in ein gebeugtes Teilstrahlenbündel B1 (+1.Ordnung), in ein gebeugtes Teilstrahlenbündel B2 (0.Ordnung) und in ein gebeugtes Teilstrahlenbündel B3 (-1.Ordnung) aufgeteilt.

Diese gebeugten Teilstrahlenbündel B1-B3 durchsetzen sodann die Meßteilung 1a in Form eines Kreuzgitters, dessen gekreuzte Teilungsstriche diagonal zu den beiden Meßrichtungen X und Y verlaufen. Dieses Kreuzgitter 1a besitzt in den durch die beiden gekreuzten Teilungsstriche gegebenen Richtungen (diagonal zur Meßrichtung X) jeweils die Gitterkonstante de/√2 und damit in Meßrichtung X die effektive Gitterkonstante de, die mit der Gitterkonstanten d der Abtastteilung 8a identisch ist. Eine solche Kreuzteilung 1a ist als eine Struktur definiert, die Lichtstrahlenbündel im wesentlichen in zwei orthogonale Richtungen beugt. Das Kreuzgitter 1a spaltet jedes gebeugte Teilstrahlenbündel B1-B3 in zwei gebeugte Teilstrahlenbündel (+1.Ordnung) und in zwei gebeugte Teilstrahlenbündel (-1.Ordnung) auf, die sowohl in Meßrichtung X als auch in der dazu senkrecht verlaufenden Richtung Y durch die diagonale Anordnung des Kreuzgitters 1a abgelenkt werden.

Es werden somit das gebeugte Teilstrahlenbündel B1 in zwei gebeugte Teilstrahlenbündel C1, C2 (-1.Ordnung) - die beiden gebeugten Teilstrahlenbündel (+1.Ordnung) sind hier der Einfachheit halber nicht dargestellt -, das gebeugte Teilstrahlenbündel B2 in zwei gebeugte Teilstrahlenbündel C3, C4 (+1.Ordnung) und in zwei gebeugte Teilstahlenbündel C5, C6 (-1.Ordnung) sowie das gebeugte Teilstrahlenbündel B3 in zwei gebeugte Teilstrahlenbündel C7, C8 (+1. Ordnung) und in ein gebeugtes Teilstrahlenbündel Ta (-1.Ordnung) - das andere Teilstrahlenbündel (-1.Ordnung) ist ebenfalls nicht dargestellt - aufgespalten.

Die gebeugten Teilstrahlenbündel C1-C8 durchsetzen anschließend wiederum die Abtastteilung 8a und gelangen unter erneuter Beugung zur Interferenz. Es entstehen somit hinter der Abtastteilung 8a aus den interferierenden gebeugten Teilstrahlenbündeln C1, C3 das resultierende gebeugte Teilstrahlenbündel E1 (+1.Ordnung) in Meßrichtung X und das resultierende gebeugte Teilstrahlenbündel E3a (0.Ordnung) in Meßrichtung X, aus den interferierenden gebeugten Teilstahlenbündeln C2, C4 das resultierende gebeugte Teilstrahlenbündel E2 (+1.Ordnung) in Meßrichtung X und das resultierende gebeugte Teilstrahlenbündel E4a (0.Ordnung) in Meßrichtung X, aus den interferierenden gebeugten Teilstrahlenbündeln C5, C7 das resultierende gebeugte Teilstrahlenbündel E3b (0.Ordnung) in Meßrichtung X und das resultierende gebeugte Teilstrahlenbündel E5 (-1.Ordnung) in Meßrichtung X sowie aus den interferierenden gebeugten Teilstrahlenbündeln C6, C8 das resultierende gebeugte Teilstrahlenbündel E4b(0.Ordnung) in Meßrichtung X und das resultierende gebeugte Teilstrahlenbündel E6 (-1.Ordnung) in Meßrichtung X. Diese resultierenden gebeugten Teilstrahlenbündel E1-E6 fallen durch das Ablenkprisma 10a und den Kondensor 5a auf die erste Gruppe von Photodetektoren D1a-D6a für die Meßrichtung X (die resultierenden gebeugten Teilstrahlenbündel E3a, E3b bzw. E4a, E4b fallen gemeinsam auf den Photodetektor D3 bzw. D4). Die Photodetektoren D1-D6 erzeugen elektrische Abtastsignale, aus denen Meßwerte für die Meßrichtung X gewonnen werden.

Ein nicht dargestellter gleichartiger Strahlengang besteht auch für die Meßrichtung Y, so daß die zweite Gruppe von Photodetektoren T1a-T6a ebenfalls elektrische Abtastsignale erzeugt, aus denen Meßwerte für die Meßrichtung Y gewonnen werden.

Die beiden Trennelemente in Form der Ablenkprismen 10a, 11a dienen zur Trennung der gebeugten Teilstrahlenbündel E1-E6 für die beiden Meßrichtungen X, Y, wenn nur eine Lichtquelle 7a vorgesehen ist. In nicht gezeigter Weise können als Trennelemente auch Gitter oder polarisationsoptische Elemente verwendet werden. Statt einer Lichtquelle können auch mehrere Lichtquellen vorgesehen sein, wobei unter Umständen die Trennelemente entfallen können. Ebenso ist es mit mehreren Lichtquellen möglich, die gebeugten Teilstrahlenbündelgruppen, die zu den beiden Meßrichtungen X und Y gehören, mit nur einer einzigen Photodetektorgruppe, z.B. zeitversetzt zu erfassen.

Die Photodetektoren D1a+D2a, D3a+D4a und D5a+D6a werden jeweils paarweise zusammengeschaltet und liefern die Abtastsignale mit einer von der Ausgestaltung der Abtastteilung 8a abhängigen, gegenseitigen Phasenverschiebung, vorzugsweise von 120°, aus denen in bekannter Weise die Meßwerte für die Meßrichtungen X und Y gewonnen werden; das gleiche gilt für die zweite Gruppe von Photodetektoren T1a-T6a. In nicht dargestellter Weise kann auch eine andere Anzahl von Photodetektoren für jede Gruppe verwendet werden, z.B. drei Detektoren.

Erfindungsgemäß fällt das am Kreuzgitter 1a gebeugte Teilstrahlenbündel Ta (-1.Ordnung) durch die Abtastteilung 8a auf den positionsempfindlichen Photodetektor Pa der Platine 4a. Dieser positionsabhängige Photodetektor Pa befindet sich gemäß Figur 2 außerhalb der Photodetektoren Da, Ta in einem Bereich, der auch bei der Relativbewegung zwischen der Abtasteinheit 3a und dem Teilungsträger 2a mit der Meßteilung 1a praktisch modulationsfrei ist, und liefert somit je nach dem Auftreffpunkt des gebeugten Teilstrahlenbündels Ta ein richtungs- und positionsabhängiges Signal. Ein derartiger positionsempfindlicher Photodetektor ist beispielsweise aus "Das industrielle Elektro/Elektronik-Magazin" Heft 19/1988, Vogel Verlag und Druck KG (Sonderdruck) bekannt. Auf den positionsempfindlichen Detektor Ta fallen auch noch weitere nicht dargestellte gebeugte Teilstrahlenbündel unterschiedlicher Ordnungen.

Bei der Montage der Positionsmeßeinrichtung an der Bearbeitungsmaschine kann man nun anhand des vom Hersteller ermittelten Signals des positionsempfindlichen Photodetektors Pa durch manuelle und/oder automatische Drehung der Abtasteinheit 3a oder des Teilungsträgers 2a mit der Meßteilung 1a um die durch die Achse 12a des Strahlenganges verlaufende Drehachse senkrecht zur Meßteilungsebene die für die Messung erforderliche optimale Winkellage der Abtasteinheit 3a bezüglich der Meßteilung 1a des Teilungsträgers 2a auf einfache Weise justieren, so daß einwandfreie Meßwerte für die Relativlage der beiden Objekte gewonnen werden.

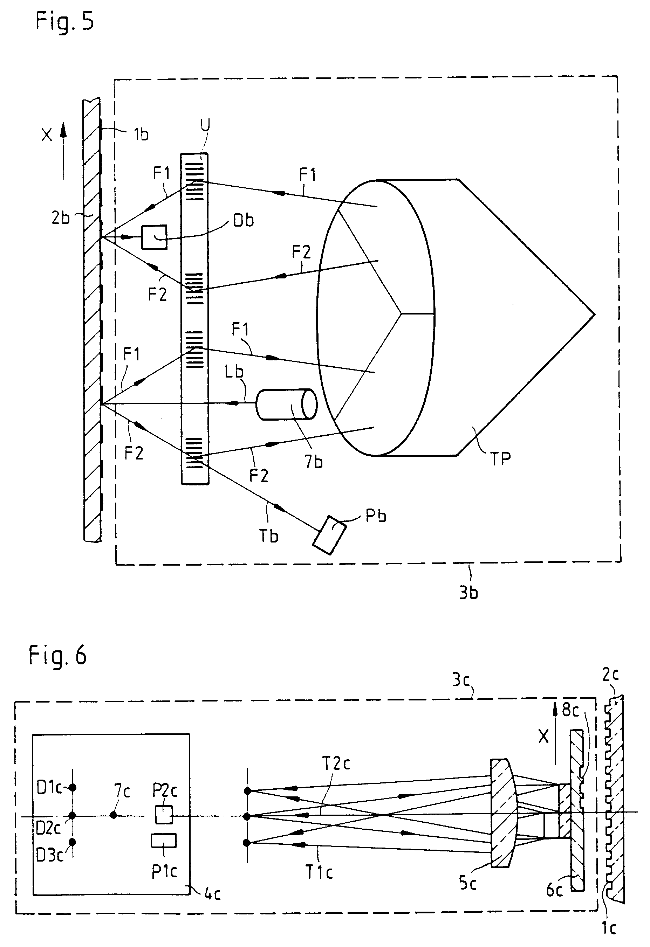

In Figur 5 ist in einer schematischen Ansicht eine zweite interferentielle Positionsmeßeinrichtung für eine Meßrichtung X zur Messung der Relativlage zweier Objekte im Auflicht dargestellt, bei der eine Meßteilung 1b in Form einer Linearteilung eines mit dem ersten Objekt verbundenen Teilungsträgers 2b von einer mit dem zweiten Objekt verbundenen Abtasteinheit 3b abgetastet wird. Die Abtasteinheit 3b enthält eine Laserlichtquelle 7b, eine Umlenkteilung U, ein Tripelprisma TP, eine Photodetektoreinheit Db für die Meßrichtung X, sowie einen positionsempfindlichen Photodetektor Pb nach der Erfindung. Die beiden nicht dargestellten Objekte können beispielsweise durch einen Schlitten und das Bett einer Bearbeitungsmaschine gebildet sein.

Ein von der Laserlichtquelle 7b ausgehendes Lichtstrahlenbündel Lb trifft auf die Meßteilung 1b und wird unter Reflexion in ein gebeugtes Teilstrahlenbündel F1 (+1.Ordnung) und in ein gebeugtes Teilstrahlenbündel F2 (-1.Ordnung) aufgespalten. Die beiden gebeugten Teilstrahlenbündel F1, F2 werden von der Umlenkteilung U durch Beugung umgelenkt und treten konvergierend in das Tripelprisma TP ein. Nach dem Austritt aus dem Tripelprisma TP treffen die beiden gebeugten Teilstrahlenbündel F1, F2 divergierend wiederum auf die Umlenkteilung U, werden von der Umlenkteilung U durch Beugung umgelenkt und vereinigen sich auf der Meßteilung 1b, von der sie nach Beugung und Interferenz auf die Photodetektoreinheit Db reflektiert werden. Die Photodetektoreinheit Db erzeugt elektrische Abtastsignale, aus denen Meßwerte für die Meßrichtung X gewonnen werden.

Erfindungsgemäß fällt das an der Meßteilung 1b gebeugte Teilstrahlenbündel F2 als von der Umlenkteilung U nicht gebeugtes Teilstrahlenbündel Tb auf den positionsempfindlichen Photodetektor Pb, der sich in einem modulationsfreien Bereich befindet und somit je nach dem Auftreffpunkt des gebeugten Teilstrahlenbündels Tb ein richtungs- und positionsabhängiges Signal liefert, das in der vorgenannten Weise die Justierung der optimalen Winkellage der Abtasteinheit 3b bezüglich der Meßteilung 1b erlaubt.

In Figur 6 ist in einer schematischen Ansicht eine dritte interferentielle Positionsmeßeinrichtung für eine Meßrichtung X zur Messung der Relativlage zweier Objekte im Auflicht dargestellt, bei der eine Meßteilung 1c in Form einer Linearteilung eines mit dem ersten Objekt verbundenen Teilungsträgers 2c von einer mit dem zweiten Objekt verbundenen Abtasteinheit 3c abgetastet wird. Die Abtasteinheit 3c enthält eine Platine 4c, einen Kondensor 5c sowie eine Abtastplatte 6c mit einer Abtastteilung 8c.

Die Platine 4c enthält neben einer Lichtquelle 7c drei Photodetektoren D1c, D2c, D3c für die Meßrichtung X sowie einen ersten eindimensionalen positionsempfindlichen Photodetektor P1c und einen zweiten zweidimensionalen positionsempfindlichen Photodetektor P2c nach der Erfindung.

Die von der Lichtquelle 7c ausgehenden Lichtstrahlenbündel werden von der Abtastteilung 8c und der Meßteilung 1c gebeugt, nach Reflexion an der Abtastteilung 8c wiedervereinigt sowie zur Interferenz gebracht und fallen auf die drei Photodetektoren D1c, D2c, D3c, aus deren elektrischen Abtastsignalen Meßwerte für die Meßrichtung X gewonnen werden.

Erfindungsgemäß fällt ein an der Meßteilung 1c gebeugtes erstes Teilstrahlenbündel T1c (1.Ordnung) durch den teilungsfreien Bereich der Abtastplatte 6c auf den ersten eindimensionalen positionsempfindlichen Photodetektor P1c, der sich in einem modulationsfreien Bereich befindet und somit je nach dem Auftreffpunkt des gebeugten Teilstrahlenbündels T1c ein richtungs- und positionsabhängiges Signal liefert, das in der vorgenannten Weise die Justierung der optimalen Winkellage der Abtasteinheit 3c bezüglich der Meßteilung 1c um die Normale der Meßteilungsebene erlaubt.

Des weiteren fällt ein an der Meßteilung 1c gebeugtes Teilstrahlenbündel T2c (0.Ordnung) auf den zweiten zweidimensionalen positionsempfindlichen Photodetektor P2c, der je nach dem Auftreffpunkt des gebeugten Teilstrahlenbündels T2c ein richtungs- und positionsabhängiges zweifaches Signal liefert, das die Justierung der optimalen Winkellagen der Abtasteinheit 3c bezüglich der Meßteilung 1c um zwei orthogonale Drehachsen senkrecht zur Normalen der Meßteilungsebene erlaubt, so daß eine Paralleljustierung der Abtastteilung 8c der Abtasteinheit 3c zur Meßteilung 1c durchgeführt werden kann.

Die Erfindung ist sowohl bei Längenmeßeinrichtungen als auch bei Winkelmeßeinrichtungen mit Erfolg einsetzbar, die nach dem vorgehend geschilderten Auflichtverfahren oder nach dem Durchlichtverfahren arbeiten, bei dem die Meßteilung durchstrahlt wird.

## Patentansprüche

1. Positionsmeßeinrichtung zur Messung der Relativlage zweier Objekte, bei der die Meßteilung eines mit dem ersten Objekt verbundenen Teilungsträgers von einer mit dem zweiten Objekt verbundenen Abtasteinheit abgetastet wird und bei der eine Einrichtung zum gegenseitigen Justieren der Abtasteinheit und der Meßteilung vorhanden ist, dadurch gekennzeichnet, daß zum gegenseitigen Justieren der Abtasteinheit (3) und der Meßteilung (1) wenigstens ein an der Meßteilung (1) gebeugtes Teilstrahlenbündel (T) erzeugt wird, in dessen positionsabhängigem Strahlengang wenigstens ein positionsempfindlicher Photodetektor (P) innerhalb der Abtasteinheit (3) angeordnet ist und daß am positionsempfindlichen Photodetektor (P) ein positionsabhängiges elektrisches Signal abgreifbar ist, mittels dessen die gegenseitige Position von Abtasteinheit (3) und Meßteilung (1) manuell und/oder automatisch justierbar ist.

2. Meßeinrichtung nach Anspruch 1, dadurch gekennzeichnet, daß ein erster positionsempfindlicher Photodetektor (Pa, Pb, P1c) zur Justierung einer optimalen Winkellage der Abtasteinheit (3) bezüglich der Meßteilung (1) um die Normale der Meßteilungsebene vorgesehen ist.

3. Meßeinrichtung nach Anspruch 1, dadurch gekennzeichnet, daß ein zweiter positionsempfindlicher Photodetektor (P2c) zur Paralleljustierung der Abtasteinheit (3c) zur Meßteilung (1c) vorgesehen ist.

4. Meßeinrichtung nach Anspruch 3, dadurch gekennzeichnet, daß der positionsempfindliche Photodetektor (P) im modulationsfreien Bereich außerhalb der Photodetektoren (D, T) für die Meßwerte für die Relativlage der beiden Objekte angeordnet ist.

5. Meßeinrichtung nach Anspruch 1, dadurch gekennzeichnet, daß die Meßteilung (1a) aus einer Kreuzteilung besteht, deren Teilungsstriche diagonal zu zwei orthogonalen Meßrichtungen (X, Y) verlaufen, und daß die Abtasteinheit (3a) zwei gekreuzte Abtastteilungen (8a, 9a) aufweist, deren Teilungsstriche senkrecht zu den beiden Meßrichtungen (X, Y) verlaufen.

6. Meßeinrichtung nach Anspruch 5, dadurch gekennzeichnet, daß die Gitterkonstante d der beiden Abtastteilungen (8a, 9a) gleich der effektiven Gitterkonstanten de der Kreuzteilung (1a) in den beiden Meßrichtungen (X, Y) ist.

7. Meßeinrichtung nach den Ansprüchen 5 und 6, dadurch gekennzeichnet, daß für die beiden orthogonalen Meßrichtungen (X, Y) zwei separate Gruppen von Photodetektoren (D1-D6, T1-T6) für gebeugte Teilstrahlenbündel (E1-E6) vorgesehen sind.

8. Meßeinrichtung nach Anspruch 7, dadurch gekennzeichnet, daß zur Trennung der gebeugten Teilstrahlenbündel (E1-E6) der beiden Meßrichtungen (X, Y) Trennelemente (10a, 11a) vorgesehen sind.

9. Meßeinrichtung nach Anspruch 8, dadurch gekennzeichnet, daß das Trennelement (10a, 11a) aus wenigstens einem Ablenkprisma, einem Beugungsgitter oder einem polarisationsoptischen Element besteht.

10. Meßeinrichtung nach Anspruch 1, dadurch gekennzeichnet, daß die Meßteilung (1b) aus einer Linearteilung besteht, deren Teilungsstriche senkrecht zur Meßrichtung (X) verlaufen, und daß die Abtasteinheit (3b) eine Umlenkteilung (U) und ein Tripelprisma (TP) aufweist.

11. Meßeinrichtung nach Anspruch 1, dadurch gekennzeichnet, daß der positionsempfindliche Photodetektor (P) aus einer Differentialdiode besteht.

12. Meßeinrichtung nach Anspruch 1, dadurch gekennzeichnet, daß der positionsempfindliche Photodetektor (P) auf einer Platine (4) mit den Photodetektoren (D, T) für die Meßwerte für die Relativlage der beiden Objekte angeordnet ist.

13. Meßeinrichtung nach den Ansprüchen 2 und 3, dadurch gekennzeichnet, daß der erste positionsempfindliche Photodetektor (Pa, Pb, P1c) eindimensional und der zweite positionsempfindliche Photodetektor (P2c) zweidimensional ausgebildet sind.

## Claims

1. Position measuring device for measuring the relative position of two objects, in which the graduation of a graduation carrier connected to the first object is scanned by a scanning unit connected to the second object and in which there is a device for mutual adjustment of the scanning unit and graduation, characterised in that for mutual adjustment of the scanning unit (3) and graduation (1) there is produced at least one partial beam (T) which is diffracted at the graduation (1) and in the position-dependent beam path of which is arranged at least one position-sensitive photodetector (P) within the scanning unit (3) and in that at the position-sensitive photodetector (P) there can be picked off a position-dependent electrical signal by means of which the mutual position of scanning unit (3) and graduation (1) can be adjusted manually and/or automatically.

2. Measuring device according to claim 1, characterised in that a first position-sensitive photodetector (Pa, Pb, P1c) is provided for adjustment of an optimum angular position of the scanning unit (3) relative to the graduation (1) about the normal of the graduation plane.

3. Measuring device according to claim 1, characterised in that a second position-sensitive photodetector (P2c) is provided for parallel adjustment of the scanning unit (3c) to the graduation (1c).

4. Measuring device according to claim 3, characterised in that the position-sensitive photodetector (P) is arranged in the modulation-free region outside the photodetectors (D, T) for the measured values for the relative position of the two objects.

5. Measuring device according to claim 1, characterised in that the graduation (1a) consists of a cross graduation of which the graduation marks extend diagonally to two orthogonal directions of measurement (X, Y), and in that the scanning unit (3a) comprises two crossed scanning graduations (8a, 9a) of which the graduation marks extend perpendicularly to the two directions of measurement (X, Y).

6. Measuring device according to claim 5, characterised in that the grid constant d of the two scanning graduations (8a, 9a) is equal to the effective grid constants de of the cross graduation (1a) in the two directions of measurement (X, Y).

7. Measuring device according to claims 5 and 6, characterised in that for the two orthogonal directions of measurement (X, Y), two separate groups of photodetectors (D1-D6, T1-T6) for diffracted partial beams (E1-E6) are provided.

8. Measuring device according to claim 7, characterised in that separating elements (10a, 11a) are provided for separation of the diffracted partial beams (E1-E6) of the two directions of measurement (X, Y).

9. Measuring device according to claim 8, characterised in that the separating element (10a, 11a) consists of at least one deviating prism, a diffraction grid or a polarisation optical element.

10. Measuring device according to claim 1, characterised in that the graduation (1b) consists of a linear graduation of which the graduation marks extend perpendicularly to the direction of measurement (X), and in that the scanning unit (3b) comprises a deviating graduation (U) and a triple prism (TP).

11. Measuring device according to claim 1, characterised in that the position-sensitive photodetector (P) consists of a differential diode.

12. Measuring device according to claim 1, characterised in that the position-sensitive photodetector (P) is arranged on a plate (4) with the photodetectors (D, T) for the measured values for the relative position of the two objects.

13. Measuring device according to claims 2 and 3, characterised in that the first position-sensitive photodetector (Pa, Pb, P1c) is of one-dimensional construction and the second position-sensitive photodetector (P2c) is of two-dimensional construction.

## Revendications

1. Dispositif de mesure de position pour mesurer la position relative de deux objets, la graduation de mesure d'un porte-graduation relié au premier objet étant exploré par une unité de lecture reliée au deuxième objet, et un dispositif étant prévu pour l'ajustement de la position réciproque de l'unité de lecture et de la graduation de mesure, caractérisé par le fait que pour l'ajustement de la position réciproque de l'unité de lecture (3) et de la graduation de mesure (1), au moins un faisceau de rayons partiel (T) diffracté sur la graduation de mesure (1) est produit, faisceau dont la marche des rayons, laquelle varie avec la position, renferme eu moins un photodétecteur (P) sensible à la position, disposé à l'intérieur de l'unité de lecture (3), et que sur le photodétecteur (P) sensible à la position peut étre prélevé un signal électrique variable avec la position, à l'aide duquel la position réciproque de l'unité de lecture (3) et de la graduation de mesure (1) peut être ajustée manuellement et/ou automatiquement.

2. Dispositif de mesure suivant la revendication 1, caractérisé par le fait qu'un premier photodétecteur (Pa, Pb, P1c) sensible à le position est prévu pour l'ajustement d'une position angulaire optimale de l'unité de lecture (3) par rapport à la graduation de mesure (1) autour de la normale au plan de la graduation de mesure.

3. Dispositif de mesure suivant la revendication 1, caractérisé par le fait qu'un deuxième photodétecteur (P2c) sensible à la position est prévu en vue de l'ajustement parallèle de l'unité de lecture (3c) par rapport à la graduation de mesure (1c).

4. Dispositif de mesure suivant la revendication 3, caractérisé par le fait que le photodétecteur (P) sensible à la position est disposé dans la zone exempt de modulation à l'extérieur des photodétecteurs (D, T) pour les valeurs mesurées pour la position relative des deux objets.

5. Dispositif de mesure suivant la revendication 1, caractérisé par le fait que la graduation de mesure (1a) est formée d'une graduation croisée dont les traits de graduation s'étendent en diagonale par rapport à deux directions de mesure octogonales (X, Y) et que l'unité de lecture (3a) présente deux graduations de lecture croisées (8a, 9a) dont les traits de graduation s'étendent perpendiculairement aux deux directions de mesure (X, Y).

6. Dispositif de mesure suivant la revendication 5, caractérisé par le fait que la constante de réseau (d) des deux graduations de lecture (8a, 9a) est égale à la constante de réseau effective (d, e) de la graduation croisée (1a) dans les deux directions de mesure (X, Y).

7. Dispositif de mesure suivant les revendications 5 et 6, caractérisé par le fait que pour les deux directions de mesure octogonales (X, Y), deux groupes séparés de photodétecteur (D1-D6, T1-T6) sont prévus pour des faisceaux de rayons partiels diffractés (E1-E6).

8. Dispositif de mesure suivant la revendication 7, caractérisé par le fait que des éléments de division (10a, 11a) sont prévus pour la division des faisceaux de rayons partiels diffractés (E1-E6) des deux directions de mesure (X, Y).

9. Dispositif de mesure suivant la revendication 8, caractérisé par le fait que l'élément de séparation (10a, 11a) se compose d'au moins un prisme de déviation, d'un réseau de diffraction ou d'un élément optique à polarisation.

10. Dispositif de mesure suivant la revendication 1, caractérisé par le fait que la graduation de mesure (1b) se compose d'une graduation linéaire dont les traits de graduation s'étendent perpendiculairement à la direction de mesure (X), et que l'unité de lecture (3b) présente une graduation de déviation (U) et un prisme trièdre (TP).

11. Dispositif de mesure suivant la revendication 1, caractérisé par le fait que le photodétecteur (P) sensible à la position se compose d'une diode différentielle.

12. Dispositif de mesure suivant la revendication 1, caractérisé par le fait que le photodétecteur (P) sensible à la position est disposé sur une platine (4) avec les photodétecteurs (D, T) pour les valeurs mesurées pour la position relative des deux objets.

13. Dispositif de mesure suivant les revendications 2 et 3, caractérisé par le fait que le premier photodétecteur (Pa, Pb, P1c) sensible à la position est réalisé de façon unidirectionnelle et le deuxième détecteur (P2c) sensible à la position réalisée de façon bidirectionnelle.
